# EUROPEAN PATENT APPLICATION

(11) **EP 1 429 271 A2**
(43) Date of publication of application: **16.06.2004**
(21) Application number: 03257525.0
(22) Date of filing: 28.11.2003
(51) Int. Cl.: G06F 17/60

(54) **Virtual warehouse system**

(30) Priority: 06.12.2002 US 431462 P; 01.10.2003 US 676340
(71) Applicant: Thomas & Betts International, Inc., Sparks, Nevada 89434 (US)
(72) Inventor: Feeney, James, Germantown Tennessee (US); Hight, Gwen, Olive Branch Mississippi (US)
(74) Representative: Howick, Nicholas Keith

(57) **Abstract**

A process and electronic system for complimenting the inventory level of a distributor with manufacturer inventory to fill a customer order requisition is provided. The process includes providing a distributor computer capable of accessing inventory information relating to distributor and manufacturer inventory; filling a customer order requisition from the distributor's or manufacturer's inventory; and generating a customer shipping document indicating fulfillment of the customer order from the distributor's inventory.

## Description

### CROSS-REFERENCE TO RELATED APPLICATION

This application claims priority to U.S. Provisional Patent Application No. 60/431,462, filed December 6, 2002.

### FIELD OF THE INVENTION:

The present invention relates to a process and system for handling the ordering and delivery of product requisitions. In particular, the invention relates to a process and electronic system for complimenting the inventory level of a distributor with the inventory of a manufacturer, wherein the distributor controls the format for presenting shipping and billing documents so as to indicate fulfillment of the order from distributor inventory.

### BACKGROUND OF THE INVENTION:

Electronic methods and systems are known for tracking and controlling information relating to business transactions and for the sharing of the business transaction information. For example, U.S. Patent No. 5,638,519 describes a computer-based system and apparatus for automatically controlling information relating to business transactions between a manufacturer and distributor, and tracking activities related thereto, the entire disclosure of which is incorporated herein by reference. In one embodiment, the apparatus includes a manufacturer computer located at a manufacturer location, a receiver (distributor) computer located at a destination for the manufacturer's goods, and a business activity controller apparatus in electrical communication with both the manufacturer computer and the receiver computer for electronically rendering mutually accessible to the manufacturer computer and the receiver computer business activity and transaction information simultaneously, substantially at the time of the transfer of goods. This computer-based system is useful for handling customer orders and delivery of goods.

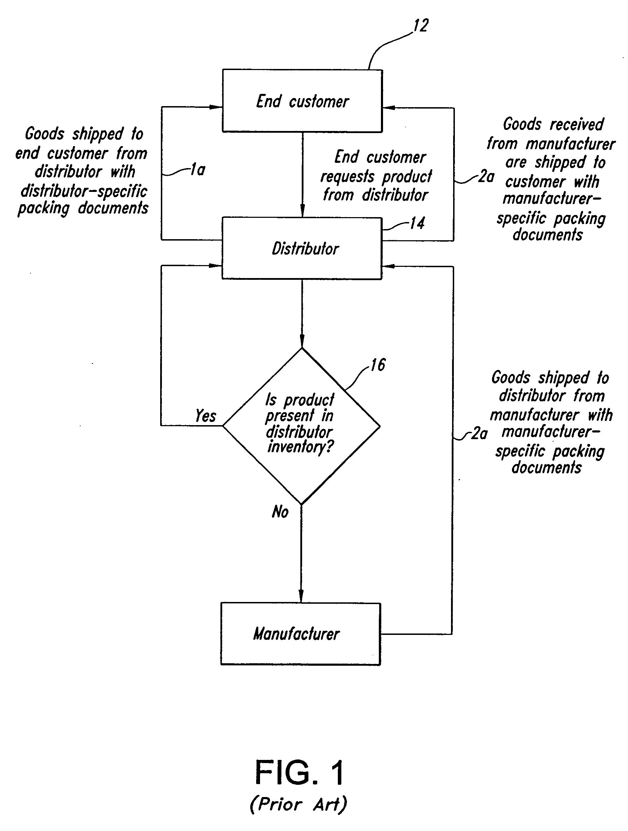

Figure 1 is a simplified schematic showing of a typical system for handling customer orders and delivery of goods. The end customer 12 requests a product from a distributor 14. The distributor 14 checks their inventory to determine if a given product is present in distributor inventory 16. If yes, distributor 14 ships the goods directly to end customer 12 from a distributor location along path 1a with distributor-specific invoice and packing documents. If the product is not present in distributor inventory, distributor 14 can use an electronic system such as the one described in U.S. Patent No. 5,638,519 to access in "real-time" manufacturer inventory and place an order with manufacturer 18 for the product. The product is then shipped from the manufacturer to the distributor (path 2a) along with manufacturer-specific packing documents, and a corresponding invoice is sent to the distributor. The manufacturer-shipped goods are subsequently shipped to the end customer from the distributor facility (path 2a), typically with the same manufacturer-specific packing documents. A disadvantage of this conventional ordering and shipping system is that the shipping documents accompanying the manufacturer-shipped product indicate to the customer that the order has been filled from the manufacturer. Yet, the distributor prefers that its shipping documents be presented in a format which indicates fulfillment of the order from distributor inventory.

U.S. Patent No. 5,694,551 discloses an electronic requisitioning system for channeling customer requisitions to internal suppliers and outside vendors that ship the items directly to the customer. Invoices are centrally processed in a centralized computer system and the customer receives a combined invoice for all item requisitions and may transmit payment back through to the central computer system. This system does not provide for generating a shipping document indicating fulfillment of the order from distributor inventory, nor the electronic communication process necessary to achieve this.

U.S. Patent No. 6,023,683 relates to an electronic sourcing system which searches at least two product catalogs for matching items to build a requisition using the data and to generate purchase orders for the selected matching items. A feature of this system is that a requisition may be: filled by searching and selecting from a catalog database of items, inventory sourced, and the resulting requisition then divided into one or more purchase orders. These purchase orders are disclosed as including an order from the distributor to the supplier (i.e. manufacturer), usually providing for direct shipment from the supplier to the customer or to an inventory site maintained by the distributor for the customer. The system does not provide for generating shipping documents that indicate fulfillment of an order from distributor inventory, even when the product is directly shipped from the manufacturer to the end-customer.

U.S. Patent No. 6,304,857 discloses an electronic billing system that allows a biller to create electronically a customized billing statement to a consumer. The system includes a statement designer that enables the biller to create a template for the billing statement. Once the statement is designed, the biller provides the statement format and billing data to a third party billing service center, which generates the electronic billing statements in the biller-designed format and electronically distributes the billing statements to consumers. This system does not provide for accessing inventory information, filling customer orders from a given inventory, or generating a customer shipping document which would indicate fulfillment of the customer order from a given inventory.

It would, therefore, be advantageous to devise an electronic system that enables a distributor to search their own inventory, as well as that of the manufacturer for items matching a customer requisition to generate purchase orders for the selected items, wherein the distribution system used enables the distributor to control the format for presenting the packing documents so that, regardless of whether the order has been filled from manufacturer or distributor inventory, the packing documents indicate to the end-customer fulfillment of the order from distributor inventory.

### SUMMARY OF THE INVENTION:

In accordance with the present invention, a method and apparatus for complimenting the inventory level of a distributor with the inventory level of a manufacturer to fill an order requisition from a customer is provided. The computer implemented method of the present invention includes the following steps: providing a distributor computer capable of accessing inventory information relating to the distributor and manufacturer inventory; filling a customer order requisition from at least one of the distributor or manufacturer inventory; and generating a customer shipping document indicating fulfillment of the customer order from the distributor inventory.

The invention further provides a system for filling a customer order from inventory of a manufacturer or distributor including: a distributor computer system capable of accessing the inventory level of both the distributor and the manufacturer; program instructions for processing the order to allow fulfillment of the order from at least one of the distributor inventory or the manufacturer inventory; and a computer-generated shipping document for transfer to the customer, the shipping document indicating that the order has been filled by the distributor.

The system of the present invention desirably provides the ability for both a manufacturer and distributor of goods to enjoy a shared view of the status of a goods' shipment and all business activities and information related thereto. This would include a shared view of the status of electronic purchase orders, shipment particulars, the receipt of shipped goods at an end-customer's location, etc. Also included would be a shared view of all pricing information related to the goods from the time of ordering to the time of receipt of such goods by the end-customer, as well as the immediate recording and sharing of any pricing or quantity discrepancy information.

In particular, the system and method of the present invention allow a distributor to compliment their own inventory with that of a manufacturer by allowing real-time access to manufacturer inventory information. The distributor can then generate an electronic purchase order to the manufacturer, which would be identified for direct shipment to the end-customer from the manufacturer. Preferably, along with the purchase order, the distributor would provide to the manufacturer distributor-specific data that would be printed on the shipping documents, the data indicating fulfillment of the order by the distributor. Preferably, the shipping documents would include the distributor's name and graphic logo, as well as unique customer identifier information thereon, such as the name and address of the customer. The shipping documents appear to have been generated at the distributor's own warehouse facility. The manufacturer drop-ships the order directly to the end-customer with the associated shipping labels and documents, which will reference the distributor's specific data provided with the purchase order, as if the product were shipped directly from the distributor's warehouse.

### BRIEF DESCRIPTION OF THE DRAWINGS:

Figure 1 is a schematic representation of a prior art requisition/distribution system.

Figure 2 is a schematic block diagram of one embodiment of a system of the present invention.

Figure 3 is a schematic diagram of a process and system according to the present invention.

Figure 4 is a flow chart of a process according to the present invention by which a customer order can be filled.

Figures 5A and 5B are flow charts of an exemplary process according to the present invention by which a customer order can be filled.

Figures 6-9 are schematic diagrams of the steps and data flow in an embodiment of the method of the present invention.

Figure 10 is an exemplary computer-generated shipping document, which is a component of the system for filling a customer order according to the present invention, the shipping document indicating to an end-customer fulfillment of the customer order from distributor inventory.

### DETAILED DESCRIPTION OF THE INVENTION:

The present invention envisions a process by which a distributor can compliment their own inventory level with the inventory level of a manufacturer to fill an order requisition from a customer. In particular, the distributor is provided with near real-time access to inventory information from the manufacturer. In situations where a given product is not present in the distributor's own warehouse facility, the distributor may fill a customer order from manufacturer inventory at a manufacturer location.

In one embodiment, the step of accessing inventory information relating to manufacturer inventory is through an electronic network. For example, in preferred embodiments there are real-time interactions between a distributor computer (generally a main frame) and a manufacturer computer (generally a main frame). Each computer can build and transmit to the other computer communications blocks of data relating to a particular requisition of an item in manufacturer inventory, for example. The manufacturer computer can then use the received data to continue processing the requisition. The distributor computer system and the manufacturer computer system can exchange data, such as purchase orders, purchase order acknowledgements and invoices in standard formats, such as those established as electronic data interchange (EDI) standards.

An important feature of the present invention is the computer-generated shipping document which is transferred to the end-customer. In particular, regardless of whether the order has been filled from distributor or manufacture inventory, the computer-generated shipping document indicates to the end-customer that the order has been filled by the distributor. This is accomplished by means of one or more shipping documents, such as the packing slip, the pallet posting documents, and the container pack list, which contain distributor-specific information thereon and include the distributor's customized format. For example, the shipping documents do, in one embodiment, contain the distributor's name and logo thereon. They may further contain the distributor's order number, as well as unique customer identifier information thereon. Preferably, the shipping documents would not include the manufacturer's logo thereon.

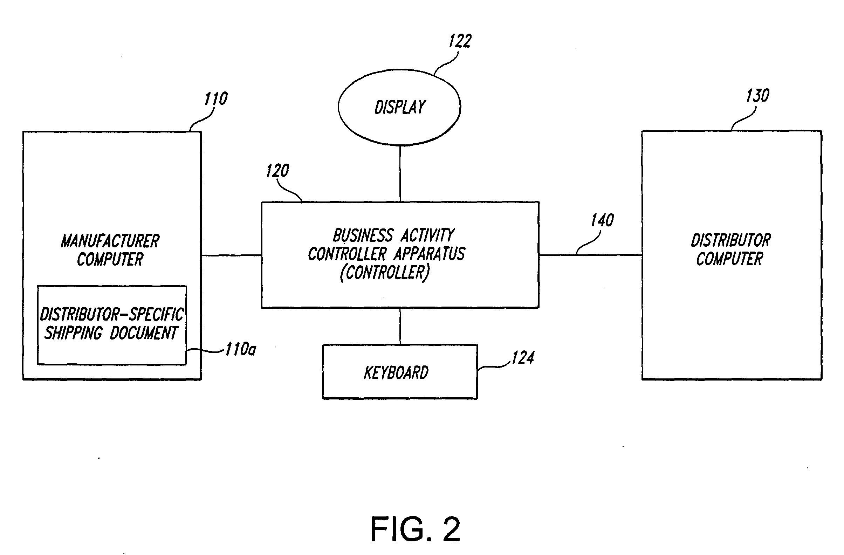

With reference now to Figure 2, the system of the present invention preferably includes a system for controlling and tracking information relating to business transactions. As described above, U.S. Patent No. 5,638,519 describes a useful system and method for automatically controlling and tracking information relating to business transactions occurring between a manufacturer and a distributor of goods. Such a system may be used to create the real-time interaction between distributor and manufacturer computers in the present invention.

Included in Figure 2, which shows one embodiment of an electronic system of the present invention, is block 110, which schematically represents a manufacturer's network or main frame computer. A business activity controller apparatus 120, which is located at a manufacturer location in this embodiment, accepts and coordinates business activity and tracking information. The business controller 120 can operate as a director, translator, processor and distributor of electronic information that may be relevant to both the manufacturer and distributor network computers. The distributor computer 130, which may be either a network or a main frame computer, can be linked via link 140 to facilitate communication between the business controller 120 and the distributor computer 130 (or computers). In order to support system communication, a business controller 120 includes a keyboard 122 for inputting electronic business transaction information at the manufacturer end and a display terminal 124 for providing information to users, such as a distributor.

In the embodiment shown in Figure 2, the business activity controller apparatus 120 preferably provides the program instructions in the system of the present invention necessary for processing an order to allow fulfillment of the order from at least one of the distributor inventory or the manufacturer inventory. Moreover, the business activity controller 120 can process and distribute the electronic information that is relevant to the computer-generated shipping document. The business activity controller 120 can identify purchase orders from the distributor computer 130 which are to be filled from manufacturer inventory for direct shipment from the manufacturer to the end-customer and can allocate such purchase orders to manufacturer locations capable of filling these orders. Moreover, the business activity controller 120 can receive, identify and transfer from distributor computer 130 distributor-specific information, such as the distributor's name and logo and unique customer identifier information and can transmit such information to manufacturer computer 110 which is capable of generating shipping documents 110a with the transmitted distributor-specific information thereon. The shipping document 110a indicates to the end-customer fulfillment of the customer order from distributor inventory, regardless of whether the order requisition has been filled from the distributor or manufacturer inventory.

An important advantage achieved with the present invention is the ability to enable delivery of merchandise to customers in the shortest possible time by direct shipment from the manufacturer to an end-customer. Another key advantage is achieved by the ability of the distributor to customize the format of the shipping documents received by the end-customer when the point of shipment to the end-customer is from a manufacturer facility.

Another advantage of this system is that it provides a method that enables distributor purchase orders, order acknowledgements, advance shipping notices, orders in transit, receipt acknowledgements, invoices, price discrepancy claims, quantity disputes, overage/shortage claims, payment acknowledgements, debit/credit adjustments, damaged goods claims, or any information related thereto, to be represented electronically and to be electronically processed. The processed information may then be monitored by both the distributor and the manufacturer without the traditional use of paper forms and the time lag inherent in human processing. This type of communication between a manufacturer and the manufacturer's distributor is essential for the placement and coordination of shipping orders, as well as for determining real inventory levels in an effort to reduce inventory costs.

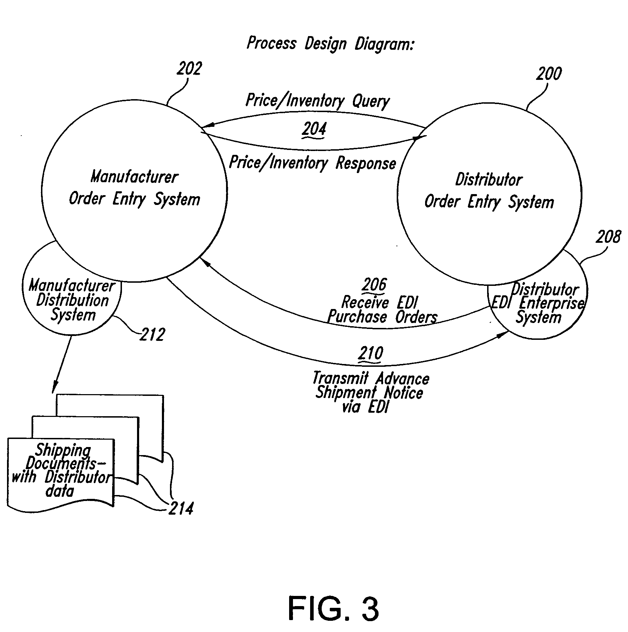

With reference now to Figure 3, a simplified schematic diagram is shown of components of the system of the present invention, and of steps in the inventive process of filling customer order requisitions with this system. In particular, in one embodiment, the distributor's order entry system 200 accesses the order entry system of the manufacturer 202, 204 with near "real-time" response to determine inventory availability by catalog number and the price for the product. The distributor receives a price/inventory response 204 from the manufacturer order entry system 202. The distributor then generates an EDI purchase order 206 to the manufacturer using an EDI system 208, the purchase order being identified as an order for direct shipment to the end-customer from the manufacturer, along with additional distributor-specific data that would be printed on the shipping documents generated by the manufacturer distribution system 212. The concept is to design a "custom" format that will contain distributor-specific data, and appear to have been generated at the distributor's own warehouse facility. Once the manufacturer distribution system 212 ships to the end-customer with the customized packing documents 214, the manufacturer order system 202 transmits an advance shipping notice 210 to the distributor system via EDI. The manufacturer stores in a data base standard distributor purchase order data, in addition to the distributor-specific data required to support the end-customer identified in the order received.

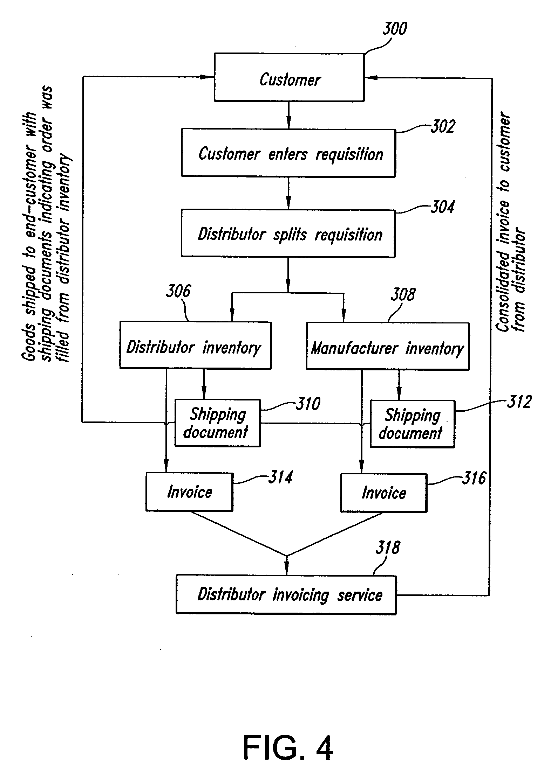

Figure 4 is a flow chart of a process according to the present invention by which a customer order can be filled. The customer at block 300 enters a product requisition at block 302 with a distributor. The distributor then splits the requisition at block 304 between distributor inventory at block 306 and manufacturer inventory at block 308, as desired. For example, the distributor may check their own distributor inventory at block 306 first, and if the product is not available, the distributor can fill the order through manufacturer inventory at block 308. As shown in Figure 4, shipping documents at blocks 310 or 312 may be computer-generated when the order is filled from distributor inventory, or manufacturer inventory, respectively. Further, regardless of whether the order is filled from distributor or manufacturer inventory, goods are shipped to the end-customer with shipping documents indicating the order was filled from distributor inventory. Moreover, invoices at blocks 314 and 316 can be generated for the items shipped. Desirably, invoice 316 from the manufacturer would be sent from a manufacturer computer electronically to a distributor invoicing service 318, and the end-customer would preferably receive a consolidated invoice from the distributor for each of the items shipped, regardless of the point of shipment (i.e. from a distributor or manufacturer facility).

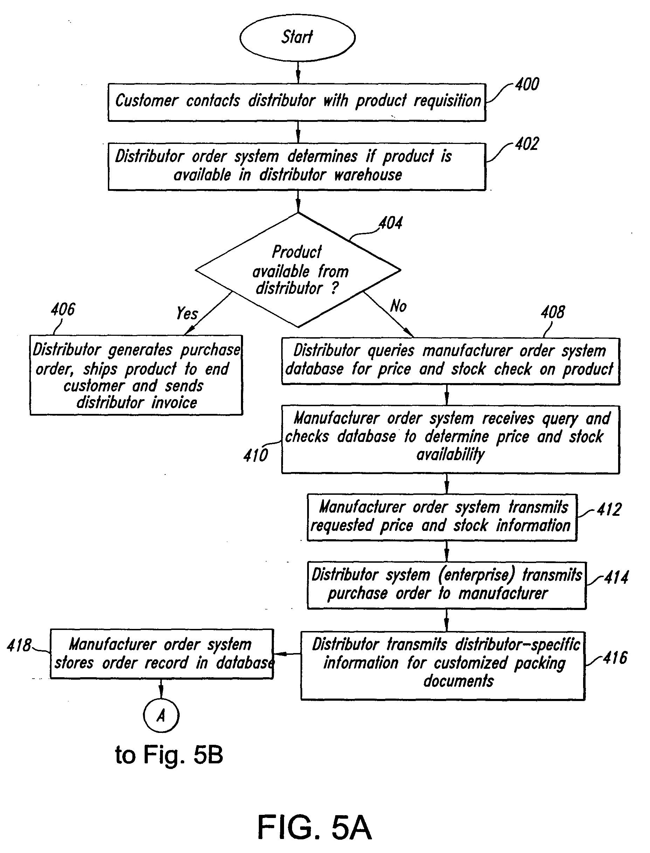

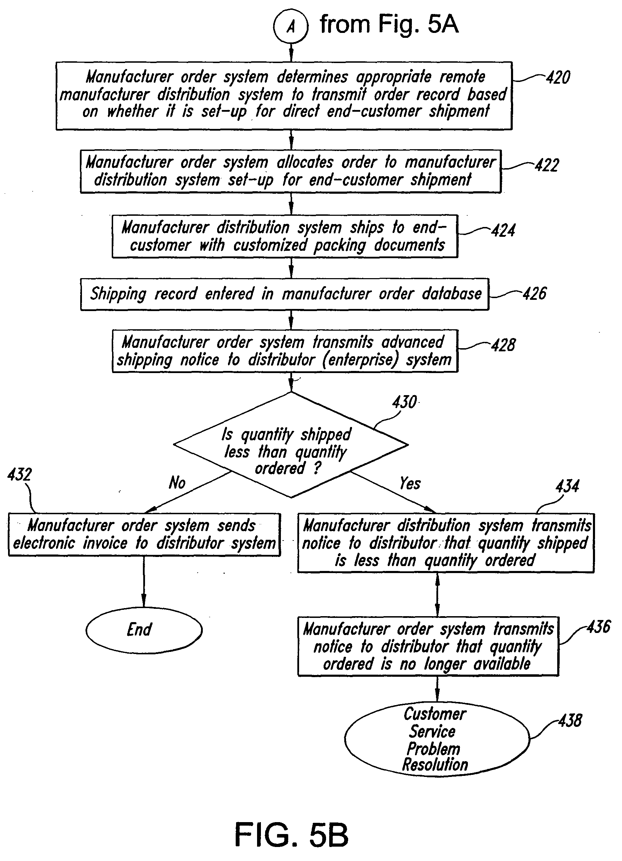

Figures 5A and 5B represent a more detailed schematic flow diagram of the general process represented in Figure 4. Block 400 represents the step of the customer contacting the distributor with a given product requisition, which may represent one or more items. At block 402 the distributor order system determines if the requested product is available in a distributor warehouse. Based on this determination at block 404, the distributor either generates a purchase order from their own inventory at block 406 or proceeds to query the manufacturer order system data base by directly accessing the same electronically for a price and stock check on the requested product (block 408). Preferably, the manufacturer order system receives the query at block 410 and checks their manufacturer data base to determine price and stock availability. Subsequently, at block 412 the manufacturer order system transmits the requested price and stock information. At block 414, the distributor's system transmits an electronic purchase order to the manufacturer. The purchase order transmitted at block 414 is identified by the distributor as a drop-ship order, which is to be directly shipped to the end-customer from the manufacturer facility. Either along with the purchase order, or subsequent to the transmittal of the purchase order, the distributor transmits distributor-specific information to the manufacturer for customized packing documents (block 416). Such customized packing documents indicate to the end-customer that the order was filled from distributor inventory. At block 418, the manufacturer order system stores the order record in a database, the order record including the distributor-specific information necessary for printing on the shipping documents.

Referring now to Figure 5B, the manufacturer order system, having received the identified purchase order at block 414, along with the necessary distributor-specific information, determines the appropriate remote manufacturer distribution system to transmit the order record stored at block 418, based on whether a given manufacturer facility is set up for direct end-customer shipment. At block 422, the manufacturer order system allocates the order to a manufacturer distribution system set up for end-customer shipments. This enables the manufacturer distribution system to ship the product directly to the end-customer, along with the customized packing documents at block 424. In particular, the process at block 424 preferably includes providing a manufacturer computer, the manufacturer computer being capable of generating the shipping documents to the end-customer. In one embodiment, this generation of the shipping documents includes transmitting the distributor-specific information stored in a manufacturer database from a manufacturer computer to the shipping documents. Moreover, the generating step includes, in another embodiment, transmitting unique customer identifier information from a manufacturer computer to the shipping documents, the unique customer identifier information having been acquired from the distributor at block 416. Such unique customer-identifier information may include the customer's name and address, customer order number, as well as preferred shipping method of the customer, or other information.

With continued reference to Figure 5B, once the product has been shipped to the end-customer, a shipping record is entered in the manufacturer order data base at block 426, and the manufacturer order system subsequently transmits an advanced shipping notice to the distributor's system (block 428). The manufacturer distributor system determines at block 430 whether the quantity shipped is less than the quantity ordered. If no, the manufacturer order system sends an electronic invoice to the distributor system at block 432 and the process ends. However, if the quantity shipped is less than the quantity ordered, the manufacturer distribution system transmits a notice to the distributor that the quantity shipped is less than the quantity ordered at block 434. Moreover, at block 436, the manufacturer order system checks its current inventory levels and transmits a notice to the distributor if the quantity ordered is no longer available at block 436. The process then proceeds at block 438 with customer service problem resolution, which will be described in further detail below. It is noted that the above-described process preferably employs a business controller apparatus, such as the one described in the system of U.S. Patent No. 5,638,519 to receive and process purchase orders from the distributor.

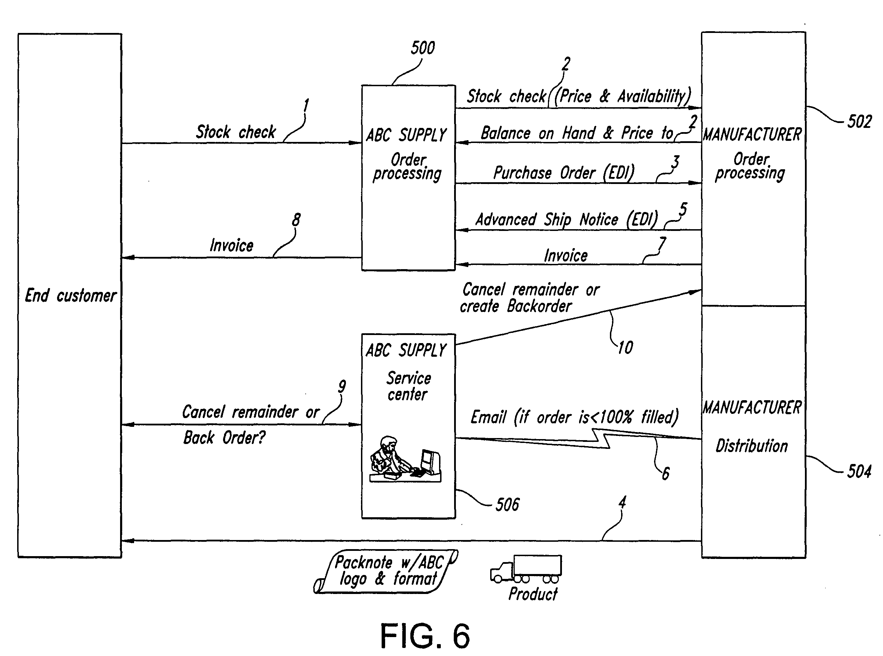

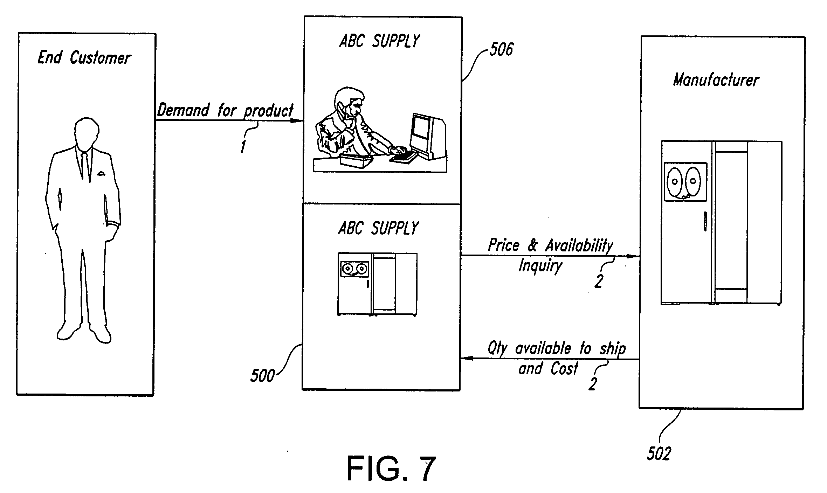

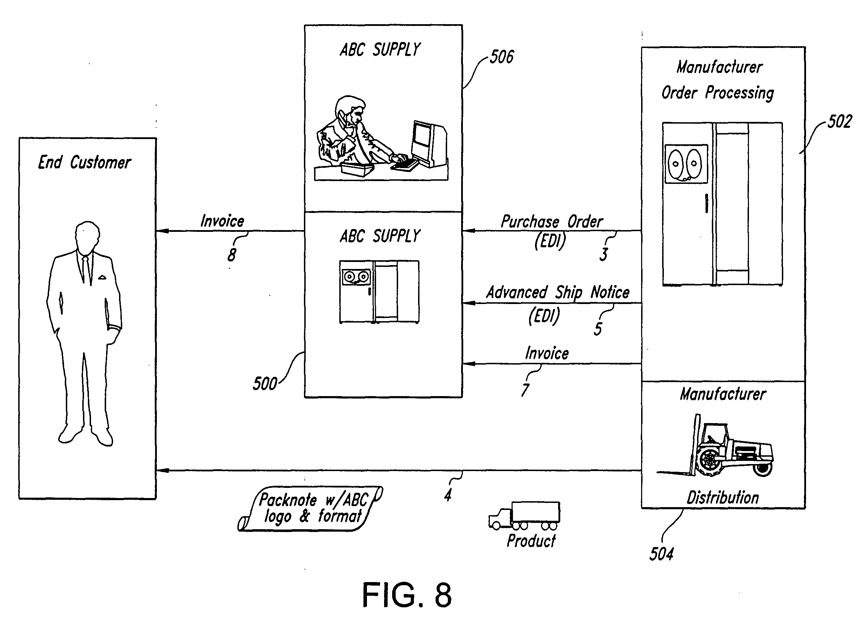

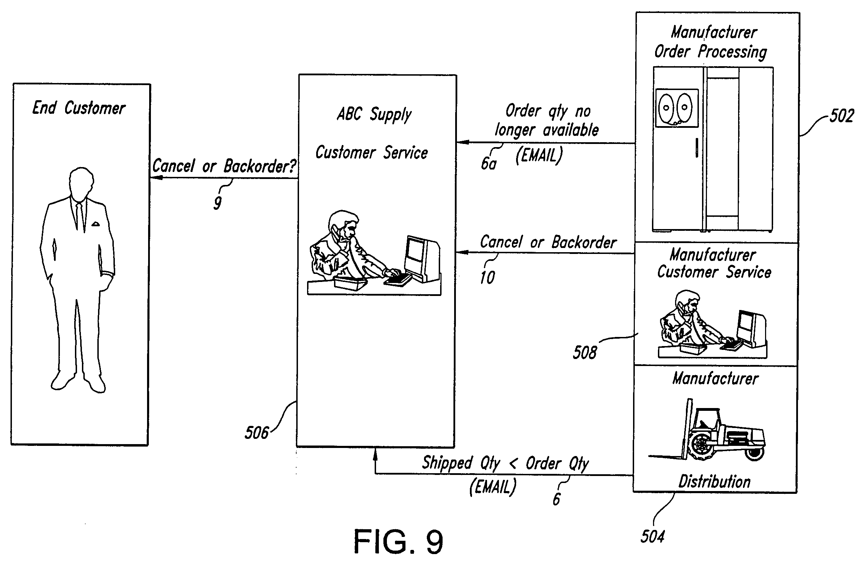

Figure 6 shows the processing steps in one embodiment of the method of the present invention, with Figures 7-9 presenting a more detailed view of the same processing steps. It is noted that the invention is not limited to the embodiment(s) shown in Figures 6-9. As shown in these figures, the process typically begins when an end-customer requests a stock check at step 1 for an item from a distributor. This stock check may be done electronically by an on-line request of the distributor, herein shown as ABC Supply. If the item is unavailable from the distributor, or if the distributor prefers to maintain their present inventory levels, the distributor order processing system 500 transmits a request at step 2 for price and stock availability to the manufacturer, and through near real-time electronic interaction, receives access to the manufacturer database for determination of the balance on hand and price at step 2. If desired, the distributor 500 generates a purchase order, which is electronically transmitted via EDI at step 3 to the manufacturer order processing system 502.

With further reference to Figures 6-9, the product is shipped directly from the manufacturer to the end-customer at step 4, and an advanced shipping notice is sent electronically at step 5 from the manufacturer order processing system 502 to the distributor order processing system 500. In the event the order is less than 100% filled, the manufacturer distribution system 504 may e-mail at step 6 the customer service center of the distributor 506. Moreover, at step 6a the manufacturer order system checks its present inventory levels and e-mails the distributor 506 if the quantity order is no longer available. An invoice is sent at step 7 from the manufacturer order processing system 502 to the distributor order processing system 500 for those items which have been shipped. The distributor may subsequently send an invoice at step 8 to the end-customer. In the interim, the customer service center 506 at the distributor contacts the end-customer at step 9 to determine whether to cancel the remainder of the order or to back order. After receiving an answer from the end-customer, the customer service center 506 relays the information received at step 10 to the manufacturer order processing system 502 or to manufacturer customer service 508. It is well within the contemplation of the present invention that each of the manufacturer and distributor may have a special customer service representative that will handle resolution of the aforementioned problems arising when an order is less than 100% filled.

As described above, an important feature of the present invention is that the shipping documents accompanying the product shipped by the manufacturer at step 4 are of a format and contain certain distributor-acquired information that make it appear to the end-customer as if the product had been shipped from a distributor location. In particular, the shipping documents would typically lack the manufacturer's logo thereon, and would contain the logo of the distributor and their customized format for shipping documents.

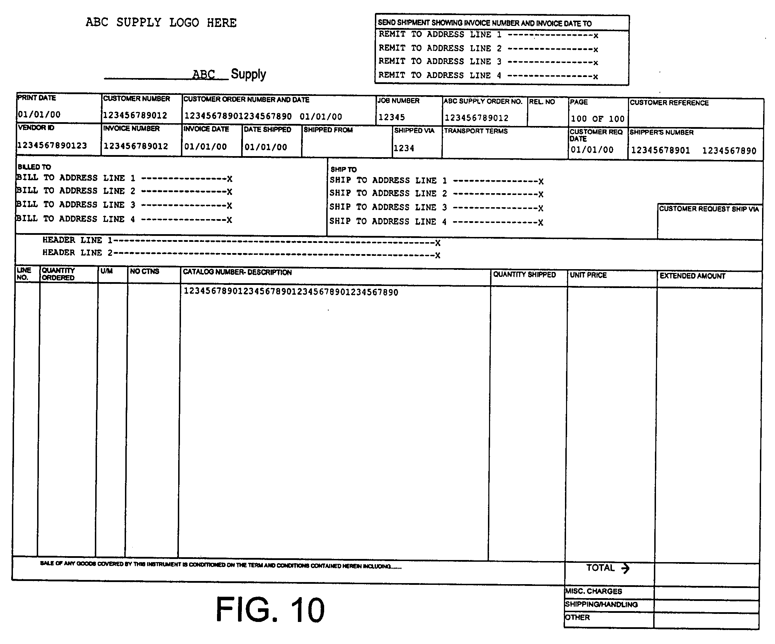

Figure 10 shows an exemplary computer-generated shipping document for transfer to the end-customer, which is an important component of the system for filling a customer order according to the present invention. Furthermore, the shipping document indicates the order has been filled by the distributor, shown as ABC Supply. As shown, the shipping document includes both the name and logo of the distributor, as well as the distributor order number, and relevant end-customer information. For example, appropriate customer identifier information may include a customer number, customer order number and order date, and the shipping address. Moreover, the shipping document may include a customer's requested shipping method, as well as the customer's requested date for delivery. It is noted that it is well within the contemplation of the present invention that all of this information need not be included on the shipping documents. However, what is an important feature is that the shipping documents fit a format typically used by the distributor, so as indicate to the end-customer that the order has been filled from distributor inventory. In this regard, the format, content and arrangement of the information on the shipping documents can be modified to match the standard shipping documents used by the distributor.

Various changes to the foregoing described and shown structures will now be evident to those skilled in the art. Accordingly, the particularly disclosed scope of the invention is set forth in the following claims.

## Claims

1. A method for complementing the inventory level of a distributor with the inventory of a manufacturer to fill an order requisition from a customer comprising the steps of:
providing a distributor computer capable of accessing inventory information relating to said distributor and manufacturer inventory;
filling a customer order requisition from at least one of said distributor or manufacturer inventory; and
generating a customer shipping document indicating fulfillment of said customer order from said distributor inventory.

2. The method of claim 1, wherein said filling is from manufacturer inventory at a manufacturer location.

3. The method of claim 2, wherein said generating step comprises generating said shipping documents at said manufacturer location where said customer order is filled.

4. The method of claim 3, wherein said generating step further comprises providing a manufacturer computer, said manufacturer computer being capable of generating said shipping documents to said customer.

5. The method of claim 4, wherein said generating step further comprises transmitting the distributor's name and logo from said manufacturer computer to said shipping documents.

6. The method of claim 4, wherein said generating step further comprises transmitting unique customer identifier information from said manufacturer computer to said shipping documents.

7. The method of claim 6, wherein said filling step further comprises transmitting said unique customer identifier information from said distributor to said manufacturer.

8. The method of claim 1, wherein said filling step further comprises providing a manufacturer computer, said manufacturer computer being capable of providing inventory levels, prices, order acknowledgements, advanced shipping notices, and invoices to said distributor.

9. The method of claim 1, wherein said accessing is through an electronic network that allows said distributor to access said manufacturer inventory.

10. The method of claim 2 wherein said filling comprises transmitting a purchase order from said distributor to said manufacturer, said purchase order being identified as for direct shipping to said customer from said manufacturer location where said order is filled.

11. The method of claim 10, wherein said filling comprises allocating said identified purchase orders to manufacturer locations capable of filling said orders.

12. A system for filling a customer order from inventory of a manufacturer or distributor comprising:
a distributor computer system capable of accessing the inventory level of both said distributor and said manufacturer;
program instructions for processing said order to allow fulfillment of said order from at least one of said distributor inventory or said manufacturer inventory; and
a computer-generated shipping document for transfer to said customer, said shipping document indicating that said order has been filled by said distributor.

13. The system of claim 12, wherein said order is filled from said manufacturer inventory at a manufacturer location.

14. The system of claim 13, wherein said processing is from a manufacturer computer system, said manufacturer computer system being capable of providing inventory levels, prices, order acknowledgements, advanced shipping notices, and invoices to said distributor computer system.

15. The system of claim 14, wherein said manufacturer computer system is further capable of generating said shipping documents for transfer to said customer.

16. The system of claim 12, wherein said shipping documents comprise the packing slip, the pallet posting documents and the container pack list.

17. The system of claim 12, wherein said shipping documents do not include the manufacturer logo thereon.

18. The system of claim 12, wherein said shipping documents contain the distributor's name and logo thereon.

19. The system of claim 12, wherein said shipping documents contain unique customer identifier information thereon.

20. The system of claim 19, wherein said distributor is capable of transmitting said unique customer identifier information to said manufacturer.

21. The system of claim 20, wherein said transmitted unique customer identifier information comprises the name and address of said customer.

22. The system of claim 20, wherein said transmitted unique customer identifier information comprises the customer-selected delivery method.

23. The system of claim 14, wherein said distributor computer system is in electrical communication with said manufacturer computer system through an electronic data interchange network.

24. The system of claim 14, wherein said distributor computer system is capable of transmitting purchase orders to said manufacturer computer system, said purchase orders being identified as for direct shipping to said customer from said manufacturer location where said order is filled.

25. The system of claim 24, wherein said manufacturer computer system is capable of allocating said identified purchase orders to said manufacturer locations capable of filling said orders.
